# EUROPÄISCHE PATENTSCHRIFT

(11) **EP 2 805 073 B1**
(45) Veröffentlichungstag und Bekanntmachung des Hinweises auf die Patenterteilung: **27.04.2016**
(21) Anmeldenummer: 13700583.1
(22) Anmeldetag: 18.01.2013
(51) Int. Cl.: F16C 19/52, F16C 33/32, F16C 33/34, G01M 13/04, G01P 3/44

(54) **VORRICHTUNG MIT WENIGSTENS EINEM WÄLZKÖRPERELEMENT UND VERFAHREN ZUR AUSGABE EINES SIGNALS**
DEVICE WITH AT LEAST A ROLLING BODY ELEMENT AND METHOD FOR OUTPUTTING A SIGNAL
DISPOSITIF COMPRENANT AU MOINS UN ÉLÉMENT ROULANT ET PROCÉDÉ PUR L'ÉMISSION D'UN SIGNAL

(30) Priorität: 20.01.2012 DE 102012200778
(43) Veröffentlichungstag der Anmeldung: 26.11.2014
(73) Patentinhaber: Aktiebolaget SKF, 415 50 Göteborg (SE)
(72) Erfinder: GRAF, Jens, 97422 Schweinfurt (DE); HAAG, Cornelia, 97633 Aubstadt (DE); OLSCHEWSKI, Armin, 97422 Schweinfurt (DE); STUBENRAUCH, Arno, 97491 Aidhausen (DE); ZIEGLER, Sebastian, 97535 Wasserlosen (DE)
(74) Vertreter: Kuhstrebe, Jochen
(86) Internationale Anmeldenummer: PCT/EP2013/050974
(87) Internationale Veröffentlichungsnummer: WO 2013/107884

(56) Entgegenhaltungen:
- DE-A1- 10 136 438
- DE-A1- 10 314 295
- DE-A1-102004 026 246
- DE-A1-102008 061 280
- DE-A1-102010 020 759
- DE-U1-202011 002 485
- JP-A- 2000 356 531

## Beschreibung

Die Erfindung betrifft eine Vorrichtung mit wenigstens einem Wälzkörperelement und ein Verfahren zur Ausgabe eines Signals.

Es ist eine Vorrichtung mit einem Wälzkörperelement eines Wälzkörpers bekannt, welche eine Steuereinheit und eine Sensoreinheit aufweist. Die Sensoreinheit ist dazu vorgesehen, eine Betriebskenngröße zu sensieren. DE 10 2010 020 759 A1 offenbart eine Vorrichtung mit einem Wälzhörper und einer Sensoranordnung, die es ermöglicht, eine Schlupfmessung durchzuführen.

Die Aufgabe der Erfindung besteht insbesondere darin, eine gattungsgemäße Vorrichtung mit einer hohen Effizienz bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Es wird eine Vorrichtung mit wenigstens einem Wälzkörperelement, zumindest einer Steuereinheit und wenigstens einer Sensoreinheit, welche dazu vorgesehen ist, zumindest eine Menge von Betriebskenngrößen des Wälzkörperelements zu sensieren, vorgeschlagen, wobei die Menge aus einer Betriebskenngröße oder aus wenigstens zwei Betriebskenngrößen besteht, und wobei die Steuereinheit dazu vorgesehen ist, ein Signal auszusenden, wenn wenigstens ein Wert der wenigstens einen Betriebskenngröße einen in der Steuereinheit gespeicherten Schwellenwert übersteigt. Unter einem "Wälzkörperelement" soll insbesondere ein Teil eines Wälzkörpers verstanden werden, welcher eine Lauffläche aufweist, die dazu vorgesehen ist, bei einem Betriebsvorgang auf einer Laufbahn, wie insbesondere einer Laufbahn eines Innen- oder Außenrings eines Wälzlagers, abzurollen. Unter einer "Steuereinheit" soll insbesondere eine Einheit verstanden werden, welche zu einem Steuern eines Vorgangs vorgesehen ist und welche vorzugsweise eine Recheneinheit, eine Speichereinheit und ein in der Speichereinheit gespeichertes Betriebsprogramm aufweist. Unter "vorgesehen" soll insbesondere speziell ausgelegt und/oder speziell ausgestattet und/oder speziell programmiert verstanden werden. Mit einer erfindungsgemäßen Ausgestaltung kann eine hohe Effizienz erreicht werden. Insbesondere kann eine lange Lebensdauer der Vorrichtung erreicht werden. Im Besonderen kann erreicht werden, dass bei einer starken Belastung der Vorrichtung das Signal eine Warnung eines Bedieners bewirkt, welche den Bediener darauf hinweist, durch Verändern wenigstens eines Betriebsparameters die Vorrichtung in einer schonenderen Art und Weise zu betreiben, so dass insbesondere ein Schmierfilm, mit welchem die Lauffläche des Wälzkörperelements während eines Betriebs in Kontakt kommt, eine gute Schmierung und damit auch einen schädigungsfreien Betrieb, insbesondere ohne Resonanzen und schädigende Schockbelastungen, gewährleistet.

Ferner wird vorgeschlagen, dass zumindest eine Betriebskenngröße der Menge eine Amplitude einer Vibration des Wälzkörperelements ist. Dadurch können Schädigungen der Vorrichtung durch Vibrationen vermieden werden.

Vorzugsweise ist zumindest eine Betriebskenngröße der Menge eine Betriebskenngröße ist, die einen Schlupf und/oder eine zeitliche Veränderung eines Schlupfs des Wälzkörperelements, welcher bei einem Betriebsvorgang auftritt, beschreibt. Unter einem "Schlupf" des Wälzkörperelements soll insbesondere eine Bewegung des Wälzkörperelements relativ zu einem Lagerring eines Wälzlagers verstanden werden, welche sich von einem Abrollen des Wälzkörperelements auf dem Lagerring unterscheidet, wobei insbesondere ein Gleiten des Wälzkörperelements auf dem Lagerring erfolgt. Dadurch könnten Schädigungen vermieden werden, welche durch eine zu lange Belastung mit einer zu großen Kraft, welche insbesondere auf den Lagerring und das Wälzkörperelements einwirkt, verstanden werden. Vorzugsweise ist das Wälzlager ein Teil der Vorrichtung und das Wälzkörperelement ein Teil des Wälzlagers.

Mit Vorteil weist die Vorrichtung eine Signaleinheit auf, welche dazu vorgesehen ist, nach einer Veranlassung durch das Signal ein von einem Bediener wahrnehmbares Warnsignal auszugeben. Dadurch kann der Bediener durch sein Bedienen derart auf die Vorrichtung einwirken, dass ein schonender Betrieb der Vorrichtung erfolgt und eine Beschädigung der Vorrichtung vermieden wird.

Ferner kann die Vorrichtung insbesondere bei Transportvorrichtungen im Bergbau oder bei Lagereinrichtungen von Schiffen oder insbesondere bei Großgetrieben eingebaut sein.

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Fig. 1 zeigt eine Windkraftanlage mit einem Wälzlager,
Fig. 2 zeigt schematisch das einen Wälzkörper aufweisende Wälzlager,
Fig. 3 zeigt eine schematische Seitenansicht des Wälzkörpers,
Fig. 4 zeigt ein Ausgangssignal eines Beschleunigungssensors des Wälzkörpers, wobei ein Beitrag der Erdbeschleunigung größer ist als ein Beitrag einer Zentrifugalkraft, und
Fig. 5 zeigt einen Polarplot, wobei der Winkel des Polarplots die Position des Schwerpunkts des Wälzkörpers im Wälzlager in Bezug auf einen Mittelpunkt des Wälzlagers angibt und auf den Achsen des Polarplots die Eigenrotationsgeschwindigkeit des Wälzkörpers aufgetragen ist.

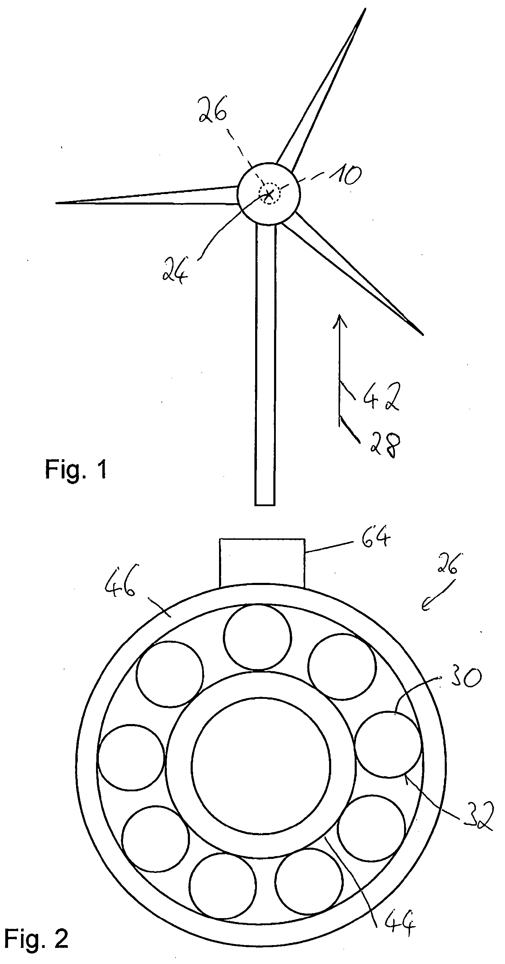

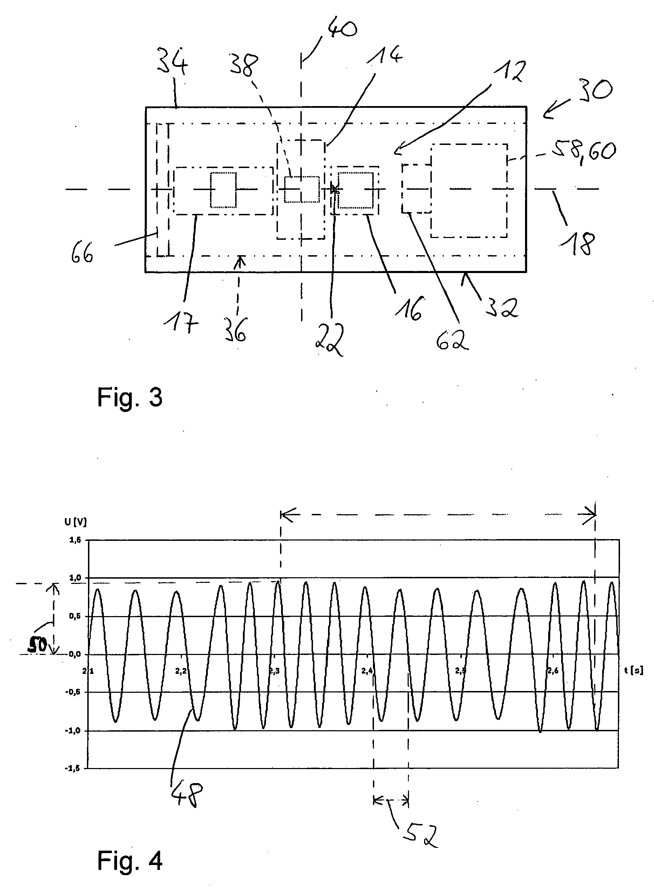

Figur 1 zeigt eine Windkraftanlage mit einem Wälzlager 26, welches einen Wälzkörper 30 (Figur 2) aufweist. Das Wälzlager 26 ist als Zylinderrollenlager ausgebildet und weist eine axiale Richtung 24 auf, welche senkrecht zu einer vertikalen Richtung 28 ist. Der Wälzkörper 30 weist eine Lauffläche 32 (Figur 3) auf, welche dazu vorgesehen ist, bei einem Betrieb des Wälzlagers 26 auf korrespondierenden Flächen des Wälzlagers 26 abzurollen. Ferner weist der Wälzkörper 30 ein einstückig ausgebildetes Wälzkörperelement 34 mit einer Ausnehmung 36 auf. Das Wälzkörperelement 34 ist hohlzylinderförmig ausgebildet, so dass die Ausnehmung 36 die Form eines Kreiszylinders aufweist. Eine Hauptsymmetrieachse 18 des Wälzkörperelements 34 verläuft parallel zu einer axialen Richtung des hohlzylinderförmig ausgebildeten Wälzkörperelements 34 und durch einen Schwerpunkt des homogen ausgebildeten Wälzkörperelements 34. Eine Sensoreinheit 12 des Wälzkörpers 30, welche in der Ausnehmung 36 angeordnet ist, ist dazu vorgesehen, bei einem Betriebsvorgang, bei welchem sich der Wälzkörper 30 bewegt, einen Schlupf des Wälzkörpers 30 und dessen zeitliche Änderung zu sensieren.

Die Sensoreinheit 12 ist an dem Wälzkörperelements 34 befestigt und weist einen ersten, einen zweiten und einen dritten Beschleunigungssensor 14, 16, 17 auf, welche baugleich ausgebildet sind. Die Sensoreinheit 12 ist frei von Gyroskopen. Eine Testmasse 38 des ersten Beschleunigungssensors 14 wird von der Hauptsymmetrieachse 18 geschnitten. Der erste Beschleunigungssensors 14 ist dazu vorgesehen, Beschleunigungen des Wälzkörpers 30 entlang einer Achse 40 zu messen, welche senkrecht zu der Hauptsymmetrieachse 18 ist und welche diese schneidet und welche zu allen Zeitpunkten immer die gleichen Punkte des Wälzkörperelements 34 schneidet. Dieses Messen der Beschleunigung erfolgt dadurch, dass der Beschleunigungssensor 14 Beschleunigungen seiner Testmasse 38 misst. In gleicher Weise ist der zweite Beschleunigungssensors 16 dazu vorgesehen, Beschleunigungen des Wälzkörpers 30 entlang einer Achse zu messen, welche senkrecht zu der Hauptsymmetrieachse 18 ist und welche diese schneidet und welche senkrecht zu der Achse 40 ist und welche zu allen Zeitpunkten immer die gleichen Punkte des Wälzkörperelements 34 schneidet. Der dritte Beschleunigungssensors 17 ist in gleicher Weise dazu vorgesehen, Beschleunigungen des Wälzkörpers 30 entlang der Hauptsymmetrieachse 18 zu messen. Die Hauptsymmetrieachse schneidet die Testmassen 38 der Beschleunigungssensoren 14, 16, 17 jeweils in ihrem Schwerpunkt, wenn sich der Wälzkörper 30 in einem Inertialsystem in Ruhe befindet. Der Beschleunigungssensor 14 ist ein piezoelektrischer Beschleunigungssensor. Ferner kann der Beschleunigungssensor 14 ein kapazitiver oder ein Beschleunigungssensor sein, welcher die Beschleunigung anhand eines Hitzestroms misst, welcher durch ein Heizmittel des Beschleunigungssensors erzeugt wird. Des Weiteren kann der Beschleunigungssensor 14 ein microelectromechanical system, ein sogenanntes MEMS, oder ein nanoelectromechanical System, ein sogenanntes NEMS, sein. Insbesondere mit einem MEMS ist eine hohe Messpräzision möglich.

Während eines Betriebsvorgangs, bei welchem eine Drehung eines Innenrings 44 des Wälzlagers 26 relativ zu einem Außenring 46 des Wälzlagers 26 stattfindet und bei welchem der Wälzkörper 30 sich bewegt, sensieren die Beschleunigungssensoren 14, 16 einen Schlupf des Wälzkörpers 30. Ein Sensieren des Schlupfs ist auch nur mit einem einzigen der Beschleunigungssensoren 14, 16 möglich. Ein Ausgangssignal 48 des ersten Beschleunigungssensors 14, welches in Form einer Spannung vorliegt, ist zeitabhängig (Figur 4) und proportional zu der Beschleunigung der Testmasse 38 des Beschleunigungssensors 14. Eine maximale Amplitude 50 des Ausgangssignals setzt sich zusammen aus der Einwirkung einer Zentrifugalkraft auf den Wälzkörper 30, welche auf den Wälzkörper 30 aufgrund einer Drehung des Wälzkörpers 30 um den Mittelpunkt des Wälzlagers 26 wirkt, und der Erdbeschleunigung. Ist die Drehung schnell, dominiert der Beitrag der Zentrifugalkraft. Ist die Drehung langsam dominiert der Beitrag der Erdbeschleunigung (siehe Figur 4), wobei in dem Fall, in dem der Beitrag der Zentrifugalkraft dominiert, pro Umlauf des Wälzkörpers 30 um den Mittelpunkte des Wälzlagers 26 eine Drehung weniger von der Sensoreinheit 12 registriert wird. Eine minimale Amplitude des Ausgangssignals 48 resultiert direkt aus der Differenz zwischen der Erdbeschleunigung und der Zentrifugalbeschleunigung, welche aus der Zentrifugalkraft resultiert. Ein Zeitraum 52 zwischen zwei Nulldurchgängen des Ausgangssignals 48, zwischen welchen genaue ein weiterer Nulldurchgang des Ausgangssignals 48 stattfindet, ist ein Zeitraum, in welcher sich der Wälzkörper 30 - in einem Inertialsystem betrachtet - etwa - bis auf eine Drehung der Richtung der Zentrifugalkraft - ein Mal um seine Hauptsymmetrieachse 18 dreht. Der Effekt der Drehung der Richtung der Zentrifugalkraft kann rechnerisch durch eine Berücksichtigung des Variierens der Amplitude des Ausgangssignals 48 berücksichtigt werden (siehe unten). Variieren die Zeiträume zwischen zwei Nulldurchgängen des Ausgangssignals 48, zwischen welcher genau ein weiterer Nulldurchgang des Ausgangssignals 48 stattfindet, mit der Zeit und bleibt dabei die Drehgeschwindigkeit des Innenrings 44 relativ zu dem Außenring 46, welcher in einem Inertialsystem ruht, konstant oder zumindest in etwa konstant, so findet bei der Bewegung des Wälzkörpers 30 Schlupf statt. Bei einer Einstellung des Wälzlagers 26, bei welcher sichergestellt ist, dass zumindest bei einer Rotation des Wälzkörpers 30 kein Schlupf vorliegt, kann aus einem verlängerten Zeitraum 52 Schlupf gefolgert werden. Eine zusätzliche Verwendung des Beschleunigungssensors 16 bei der Schlupfsensierung erhöht die Präzision.

Ferner ist die Sensoreinheit 12 dazu vorgesehen, eine Position des Schwerpunkts 22 des Wälzkörpers 30 in einem Inertialsystem zu messen. Ein Bezugssystem, in dem der Außenring 46 und der Erdboden ruhen, wird noch als Inertialsystem angesehen. Weist das Ausgangssignal 48 eine maximale Amplitude auf, so ist der Schwerpunkt 22 bei seiner Bewegungsbahn an einer tiefsten Stelle in Bezug auf die Vertikale 42 angeordnet. Daraus kann näherungsweise ebenfalls auf die Position eines Wälzkörperkäfigs (nicht dargestellt) des Wälzlagers 26 geschlossen werden.

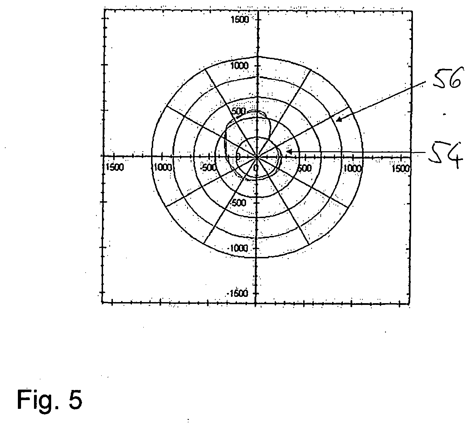

Figur 5 zeigt einen Polarplot, welcher aus Messdaten der Sensoreinheit 12 gewonnen wurde, wobei der Winkel des Polarplots einem Winkel entspricht, der die Position des Schwerpunkts des Wälzkörpers 30 im Wälzlager 26 in Bezug auf einen Mittelpunkt des Wälzlager 26 angibt und auf den Achsen die Eigenrotationsgeschwindigkeit des Wälzkörpers 30 aufgetragen ist, wobei zwei Kurven 54 dargestellt sind, welche jeweils für eine Umrundung des Mittelpunkts des Wälzlagers 26 durch den Wälzkörper 30 stehen und welche die dabei jeweils vorherrschende tatsächliche Eigenrotationsgeschwindigkeit des Wälzkörpers 30 wiedergeben. Die tatsächliche Eigenrotationsgeschwindigkeit des Wälzkörpers 30 ist die Winkelgeschwindigkeit, mit der sich - betrachtet in einem Intertialsystem - der Wälzkörper 30 tatsächlich um seine Hauptsymmetrieachse 18 dreht. Ferner ist ein Kreis 56 gezeigt, welcher die Maximal- Eigenrotationsgeschwindigkeit wiedergibt, welcher der Wälzkörper 30 bei einem reinen Abrollen auf Innen- und Außenring 44, 46 hätte. Im in Figur 5 gezeigten Beispiel liegen die Kurven 54 innerhalb des Kreises 56, so dass bei der Bewegung des Wälzkörpers 30 permanent Schlupf auftritt.

Ferner weist der Wälzkörper 30 eine als Steuereinheit 60 ausgebildete Einheit 58 mit einer Batterie, welche Stromversorgung liefert, einer Recheneinheit, einer elektronischen Speichereinheit, einer Sende-Empfangseinheit und einer Antenne auf. In der Speichereinheit ist ein Betriebsprogramm gespeichert. Die Einheit 58 ist elektrisch mit der Sensoreinheit 12 verbunden. Daten der Sensoreinheit 12 werden von der Einheit 58 durch ein Kabel an die Recheneinheit der Einheit 58 übertragen. Die Recheneinheit erfasst den Schlupf mit Hilfe der Daten der Sensoreinheit 12 quantitativ. Die Recheneinheit berechnet mit Hilfe der Daten der Sensoreinheit 12 ebenfalls die Position des Schwerpunkts 22 des Wälzkörpers 30 in dem genannten Inertialsystem.

Figur 5 zeigt einen Betrieb, bei dem sich der Wälzkörper 30 mit relativ viel Schlupf bewegt. Hier liegt ein großer Unterschied zwischen tatsächlicher Eigenrotationsgeschwindigkeit und Maximal-Eigenrotationsgeschwindigkeit vor. Bei einem sich davon unterscheidenden Betrieb, bei dem das Wälzlager optimal schonend betrieben wird und Lagerschäden vermieden werden, ist die tatsächliche Eigenrotationsgeschwindigkeit des Wälzkörpers 30 um etwa drei Prozent kleiner als eine fiktive Maximal-Eigenrotationsgeschwindigkeit des Wälzkörpers 30. Dabei ist die fiktive Maximal-Eigenrotationsgeschwindigkeit diejenige Eigenrotationsgeschwindigkeit des Wälzkörpers 30, mit welcher sich der Wälzkörper 30 um die Hauptsymmetrieachse 18 drehen würde, wenn der Wälzkörper 30 ohne Schlupf und damit ohne Gleiten auf dem Innenring 44 und dem Außenring 46 abrollt und sich der Schwerpunkt 22 - betrachtet in einem bestimmten Inertialsystem - mit genau der gleichen Geschwindigkeit bewegt wie bei der Bewegung des Wälzkörpers 30 mit der tatsächlichen Eigenrotationsgeschwindigkeit. Aus den von der Sensoreinheit 12 gemessenen Daten berechnet die Recheneinheit die tatsächliche Eigenrotationsgeschwindigkeit des Wälzkörpers 30 und die fiktive Maximal-Eigenrotationsgeschwindigkeit Wälzkörpers 30. Ist die tatsächliche Eigenrotationsgeschwindigkeit größer als ein Schwellenwert von achtundneunzig Prozent der fiktiven Maximal-Eigenrotationsgeschwindigkeit, so gibt die Steuereinheit 60 ein Signal aus an die Signaleinheit 62 des Wälzkörpers 30, welche den Bediener, dessen Aufgabe es insbesondere ist, Betriebsparameter einzustellen, akustisch und/oder optisch durch Ausgabe eines Warnsignals warnt. Der Schwellenwert ist in der Steuereinheit 60 gespeichert. Die Ausgabe des Warnsignals erfolgt also insbesondere, wenn der Außenring 46 und der Innenring mit einer zu hohen Kraft gegeneinander gedrückt werden. Die Signaleinheit 62 kann auch an einer anderen Stelle der Windkraftanlage oder in einem Kontrollraum angeordnet sein, wobei Daten zur Signaleinheit 62 hierbei durch Funk übermittelt werden können.

Des Weiteren weist die Sensoreinheit 12 einen Vibrationssensor 66 auf, der Amplituden aller Vibrationen des Wälzkörperelements 34 misst, welche in einem Frequenzbereich zwischen zwanzig und dreißig Kilohertz liegen. Übersteigt eine der Amplituden einen in der Steuereinheit 60 gespeicherten Amplituden-Schwellenwert, so gibt die Steuereinheit 60 ein Signal aus an die Signaleinheit 62 des Wälzkörpers 30, welche den Bediener, dessen Aufgabe es insbesondere ist, Betriebsparameter einzustellen, akustisch und/oder optisch durch Ausgabe eines Warnsignals warnt. Dieses Übersteigen kann dadurch verursacht sein, dass kein Schmierfilm zwischen dem Wälzkörper 30 und dem Innenring 44 und/oder dem Außenring 46 vorhanden ist.

Wenn die Steuereinheit 60 ein Signal aufgrund der Überschreitung eines Schwellenwerts ausgibt, kann eine Schmiereinrichtung 64 des Wälzlagers 36 Schmiermittel zwischen Außenring 46 und Innenring einbringen und damit dem Wälzkörper 30 zuführen.

Die Erfindung kann entsprechend für andere Lagertypen, wie insbesondere Kegelrollenlager verwendet werden. Ferner ist denkbar, dass das Wälzlager 26 auch in anderen Bereichen, z. B. bei Lagerungen auf Schiffen, eingesetzt wird.

**Bezugszeichenliste**

| | |
|---|---|
| 12 | Sensoreinheit |
| 14 | Beschleunigungssensor |
| 16 | Beschleunigungssensor |
| 17 | Beschleunigungssensor |
| 18 | Hauptsymmetrieachse |
| 22 | Schwerpunkt |
| 24 | Richtung |
| 26 | Wälzlager |
| 28 | Richtung |
| 30 | Wälzkörper |
| 32 | Lauffläche |
| 34 | Wälzkörperelement |
| 36 | Ausnehmung |
| 38 | Testmasse |
| 40 | Achse |
| 42 | Vertikale |
| 44 | Innenring |
| 46 | Außenring |
| 48 | Ausgangssignal |
| 50 | Amplitude |
| 52 | Zeitraum |
| 54 | Kurve |
| 56 | Kreis |
| 58 | Einheit |
| 60 | Steuereinheit |
| 62 | Signaleinheit |
| 64 | Schmiereinrichtung |
| 66 | Vibrationssensor |

## Patentansprüche

1. Vorrichtung mit
wenigstens einem Wälzkörperelement (34),
zumindest einer Steuereinheit (60) und
wenigstens einer Sensoreinheit (12), die wenigstens teilweise in einer Ausnehmung des Wälzkörperelements (34) angeordnet ist und die wenigstens einen Beschleunigungssensor (14, 16, 17) aufweist, welcher dazu vorgesehen ist, eine zeitliche Veränderung eines Schlupfs des Wälzkörperelements (34), welcher bei einem Betriebsvorgang auftritt, zu sensieren, und
wobei die Steuereinheit (60) dazu vorgesehen ist, ein Signal auszusenden, wenn wenigstens ein Wert des sensierten Schlupfs einen in der Steuereinheit (60) gespeicherten Schwellenwert übersteigt.

2. Vorrichtung nach Anspruch 1, wobei eine bewegliche Testmasse (38) eines ersten Beschleunigungssensors (14) von einer Hauptsymmetrieachse (18) des Wälzkörperelements (34) geschnitten wird, und wobei der erste Beschleunigungssensor (14) dazu vorgesehen ist, eine Beschleunigung des Wälzkörperelements (34) vermittels einer Beschleunigungen der Testmasse (38) entlang einer ersten Achse (40) zu messen, welche senkrecht zu der Hauptsymmetrieachse (18) ist und welche diese schneidet und welche zu allen Zeitpunkten stets die gleichen Punkte des Wälzkörperelements (34) schneidet.

3. Vorrichtung nach Anspruch 2, wobei das Wälzkörperelement (34) ferner einen zweiten Beschleunigungssensor (16) aufweist, der angepasst ist, um eine Beschleunigung des Wälzkörperelements (34) entlang einer zweiten Achse zu messen, welche senkrecht zu der Hauptsymmetrieachse (18) ist und welche diese schneidet und welche senkrecht zu der ersten Achse (40) ist und welche zu allen Zeitpunkten immer die gleichen Punkte des Wälzkörperelements (34) schneidet.

4. Vorrichtung nach einem der Ansprüche 2 oder 3, wobei die Hauptsymmetrieachse (18) die jeweilige Testmasse (38) des ersten und/oder des zweiten Beschleunigungssensors (14; 16) jeweils in ihrem Schwerpunkt schneidet, wenn sich das Wälzkörperelement (34) in einem Inertialsystem in Ruhe befindet.

5. Vorrichtung nach einem der vorherigen Ansprüche, wobei der wenigstens eine Beschleunigungssensor (14, 16, 17) einen piezoelektrischen Beschleunigungssensor, einen kapazitiven Beschleunigungssensor, einen Beschleunigungssensor, welcher die Beschleunigung anhand eines Hitzestroms misst, welcher durch ein Heizmittel des Beschleunigungssensors erzeugt wird, ein MEM , oder ein NEM aufweist.

6. Vorrichtung nach einem der vorherigen Ansprüche, wobei die Vorrichtung eine Signaleinheit (62) aufweist, welche dazu vorgesehen ist, nach einer Veranlassung durch das Signal ein von einem Bediener wahrnehmbares Warnsignal auszugeben.

7. Vorrichtung nach einem der vorherigen Ansprüche, **gekennzeichnet durch** eine Schmiereinrichtung (64), welche dazu vorgesehen ist, dem Wälzkörperelement (34) nach einer Veranlassung **durch** das Signal Schmiermittel zuzuführen.

8. Vorrichtung nach einem der Ansprüche, wobei die Vorrichtung als Wälzlager (26) oder als Wälzkörper (30) ausgebildet ist.

9. Maschine, insbesondere Windkraftanlage, mit einer Vorrichtung nach einem der Ansprüche 1 bis 8.

10. Verfahren zur Ausgabe eines Signals, insbesondere mit einer Vorrichtung nach einem der Ansprüche 1 bis 8, bei welchem eine zeitliche Veränderung eines Schlupfs eines Wälzkörperelements (34), welcher bei einem Betriebsvorgang auftritt, mit einer Sensoreinheit (12), die wenigstens teilweise in einer Ausnehmung des Wälzkörperelements (34) angeordnet ist und die wenigstens einen Beschleunigungssensor (14, 16, 17) aufweist, sensiert wird,
wobei eine Steuereinheit (60) ein Signal aussendet, wenn wenigstens ein Wert der wenigstens des sensierten Schlupfs einen in der Steuereinheit (60) gespeicherten Schwellenwert übersteigt.

## Claims

1. Device having
at least one rolling body element (34),
at least one control unit (60) and
at least one sensor unit (12) which is at least partially arranged in a recess in the rolling body element (34) and which has at least one acceleration sensor (14, 16, 17) which is provided for sensing a change over time in the slip of the rolling body element (34) which occurs during an operating process, and
wherein the control unit (60) is provided for emitting a signal if at least one value of the sensed slip exceeds a threshold value stored in the control unit (60).

2. Device according to Claim 1, wherein a movable test mass (38) of a first acceleration sensor (14) is intersected by a main axis of symmetry (18) of the rolling body element (34), and wherein the first acceleration sensor (14) is provided for measuring an acceleration of the rolling body element (34) by means of an acceleration of the test mass (38) along a first axis (40) which is perpendicular to the main axis of symmetry (18) and which intersects the latter and always intersects the same points on the rolling body element (34) at all times.

3. Device according to Claim 2, wherein the rolling body element (34) also has a second acceleration sensor (16) which is adapted to measuring an acceleration of the rolling body element (34) along a second axis which is perpendicular to the main axis of symmetry (18) and which intersects the latter and which is perpendicular to the first axis (40) and which always intersects the same points on the rolling body element (34) at all times.

4. Device according to one of Claims 2 and 3, wherein the main axis of symmetry (18) intersects the respective test mass (38) of the first and/or second acceleration sensors (14; 16) in each case at its centre of gravity if the rolling body element (34) is located at rest in an inertial system.

5. Device according to one of the preceding claims, wherein the at least one acceleration sensor (14, 16, 17) has a piezoelectric acceleration sensor, a capacitive acceleration sensor, an acceleration sensor which measures the acceleration on the basis of a heating current which is generated by a heating means of the acceleration sensor, and an MEM or an NEM.

6. Device according to one of the preceding claims, wherein the device has a signal unit (62) which is provided for outputting, after prompting by the signal, a warning signal which can be perceived by an operator.

7. Device according to one of the preceding claims, **characterized by** a lubrication device (64) which is provided for supplying lubricant to the rolling body element (34) after prompting by the signal.

8. Device according to one of the claims, wherein the device is embodied as a roller bearing (26) or as a rolling body (30).

9. Machine, in particular wind power plant, having a device according to one of Claims 1 to 8.

10. Method for outputting a signal, in particular with a device according to one of Claims 1 to 8, in which a change over time in the slip of a rolling body element (34), which slip occurs during an operating process, is sensed with a sensor unit (12), which is arranged at least partially in a recess in the rolling body element (34) and which has at least one acceleration sensor (14, 16, 17), wherein a control unit (60) outputs a signal if at least one value of the at least the sensed slip exceeds a threshold value which is stored in the control unit (60).

## Revendications

1. Dispositif comprenant :
au moins un élément roulant (34),
au moins une unité de commande (60) et
au moins une unité de détection (12) qui est disposée au moins en partie dans un évidement d'élément roulant (34) et qui comprend au moins un capteur d'accélération (14, 16, 17), qui est conçu pour détecter une variation temporelle d'un patinage de l'élément roulant (34) qui se produit lors d'une période de fonctionnement, et
dans lequel l'unité de commande (60) est conçue pour émettre un signal lorsqu'au moins une valeur du patinage détecté dépasse une valeur de seuil stockée dans l'unité de commande (60).

2. Dispositif selon la revendication 1, dans lequel un axe de symétrie principal (18) de l'élément roulant (34) passe par une masse d'épreuve mobile (38) d'un premier capteur d'accélération (14) et dans lequel le premier capteur d'accélération (14) est conçu pour mesurer une accélération de l'élément roulant (34) au moyen d'une accélération de la masse d'épreuve (38) le long d'un premier axe (40) qui est perpendiculaire à l'axe de symétrie principal (18) et qui passe par celui-ci et qui passe toujours à tous les instants par les mêmes points de l'élément roulant (34).

3. Dispositif selon la revendication 2, dans lequel l'élément roulant (34) comprend en outre un second capteur d'accélération (16) qui est apte à mesurer une accélération de l'élément roulant (34) le long d'un second axe qui est perpendiculaire à l'axe de symétrie principal (18) et qui passe par celui-ci et qui est perpendiculaire au premier axe (40) et qui passe toujours à tous les instants par les mêmes points de l'élément roulant (34).

4. Dispositif selon l'une des revendications 2 ou 3, dans lequel l'axe de symétrie principal (18) passe toujours par le centre de gravité de la masse d'épreuve respective (38) du premier et/ou du second capteur d'accélération (14 ; 16) lorsque l'élément roulant (34) est au repos dans son système inertiel.

5. Dispositif selon l'une quelconque des revendications précédentes, dans lequel l'au moins un capteur d'accélération (14, 16, 17) comprend un capteur d'accélération piézoélectrique, un capteur d'accélération capacitif, un capteur d'accélération qui mesure l'accélération sur la base d'un courant de chauffage qui est généré par un moyen chauffant du capteur d'accélération, un MEM ou un NEM.

6. Dispositif selon l'une quelconque des revendications précédentes, dans lequel le dispositif comprend une unité génératrice de signal (62) qui est conçue pour délivrer un signal d'alarme perceptible par un utilisateur après un déclenchement provoqué par le signal.

7. Dispositif selon l'une quelconque des revendications précédentes, **caractérisé par** un dispositif de lubrification (64) qui est conçu pour appliquer des lubrifiants à l'élément roulant (34) après un déclenchement provoqué par le signal.

8. Dispositif selon l'une quelconque des revendications précédentes, dans lequel le dispositif est réalisé sous la forme de paliers à rouleaux (26) ou d'organes roulants (30).

9. Machine, notamment centrale éolienne comportant un dispositif selon l'une quelconque des revendications 1 à 8.

10. Procédé destiné à délivrer un signal notamment au moyen d'un dispositif selon l'une quelconque des revendications 1 à 8, dans lequel une variation temporelle d'un patinage d'un élément roulant (34), qui se produit lors d'une période de fonctionnement, comprenant une unité de détection (12) qui est disposée au moins partiellement dans un évidement de l'élément roulant (34) et qui comprend au moins un capteur d'accélération (14, 16, 17), est détectée,
dans lequel une unité de commande (60) émet un signal lorsqu'au moins une valeur de l'au moins le patinage détecté dépasse une valeur de seuil stockée dans l'unité de commande (60).
